(19) Europäisches Patentamt
European Patent Office
Office européen des brevets

(11) **EP 1 892 712 A2**

(12) **EUROPEAN PATENT APPLICATION**

(43) Date of publication:
27.02.2008 Bulletin 2008/09

(51) Int Cl.:
*G11B 19/20* (2006.01)   *G11B 19/04* (2006.01)

(21) Application number: 07253161.9

(22) Date of filing: 10.08.2007

(84) Designated Contracting States:
AT BE BG CH CY CZ DE DK EE ES FI FR GB GR HU IE IS IT LI LT LU LV MC MT NL PL PT RO SE SI SK TR
Designated Extension States:
AL BA HR MK YU

(30) Priority: 22.08.2006 US 507748

(71) Applicant: **Seagate Technology LLC**
**Scotts Valley, CA 95066 (US)**

(72) Inventors:
• **Shu, Jia Hong**
 **Singapore 150036 (SG)**
• **Pang, Tze Ming**
 **Singapore 587968 (SG)**

• **Hedding, Larry Robert**
 **Boulder,**
 **Colorado, 80301-3804 (US)**
• **Ooi, Kian Keong**
 **Singapore 529773 (SG)**
• **Ang, June Christian**
 **Singapore 12307 (SG)**
• **Say, Kwee Teck**
 **Singapore 809454 (SG)**
• **Kastler, Danny Joe**
 **Longmont,**
 **Colorado (US)**

(74) Representative: **Cloughley, Peter Andrew et al**
**Miller Sturt Kenyon**
**9 John Street**
**London WC1N 2ES (GB)**

(54) **Active brake for spindle motor**

(57)    A reverse torque, forward commutation motor driver system for a phased motor rapidly decelerates or "brakes" the motor by exciting, in sequence, a complementary excitation signal in each normal commutation state of the forward state machine, thereby providing an active braking effect. After active braking reduces the rotational velocity of the motor below a threshold, a dynamic braking technique can replace the active braking, wherein high-side drivers are set to an opposite voltage as compared to low-side drivers.

Fig. 1

## Description

### Background

Portable disc drive devices share a common problem: they are often dropped, bumped, or shaken. If the drive is operating during such events, the resulting impact can cause the hard disc drive head to impact the storage media, erasing data and potentially damaging the recording head. In addition, the spindle motor that rotates the storage media within the device can also be damaged by impact or shock during operation. Damage to spindle motors can result in poor tracking of data tracks and potentially a seized motor or leakage of lubrication fluid on the media.

### Summary

Implementations described and claimed herein address the foregoing problems by providing a reverse torque, forward commutation motor driver. The driver rapidly decelerates or "brakes" the motor by exciting, in sequence, a complementary excitation signal in each normal commutation state of the forward state machine, thereby providing an active braking effect. After active braking reduces the rotational velocity of the motor below a threshold, a dynamic braking technique can replace the active braking, wherein high-side drivers of the motor driver are set to an opposite voltage as compared to low-side drivers of the motor driver.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### Brief Descriptions of the Drawings

FIG. 1 illustrates exemplary control circuitry for a phased motor.

FIG. 2 illustrates exemplary phase diagrams for excitation signals in normal operation and in braking operation during rotation of a phased motor.

FIG. 3 illustrates exemplary operations for controlling rotation of a phased motor.

FIG. 4 illustrates a plan view of a disc drive in accordance with at least a portion of the described technology.

FIG. 5 illustrates the primary functional components of a disc drive incorporating one of the various implementations of the described technology.

### Detailed Descriptions

A disc drive is a data storage device used to store digital data. A typical disc drive includes a number of rotatable recording discs that are axially aligned and mounted to a spindle motor for rotation at a high rotational velocity. A corresponding array of read/write heads access tracks defined on the respective disc surfaces to write data to and read data from the discs.

Disc drive spindle motors are typically provided with a three-phase, direct current (DC) brushless motor configuration. The phase windings are arranged about a stationary stator on a number of radially distributed poles. A rotatable spindle motor is provided with a number of circumferentially extending permanent magnets in close proximity to the poles. Application of current to the windings induces electromagnetic fields that interact with the magnetic fields of the magnets to apply torque to the spindle motor hub and induce rotation of the discs. It should be understood, however, that, while this Detailed Description uses disc drives and spindle motors as example implementations, other phased motors are also contemplated using the described technology.

Present spindle motor designs use electronic commutation and back electromagnetic force (BEMF) detection circuitry to provide closed-loop spindle motor control. Such approach generally entails applying a predetermined sequence of commutation states to the phase windings of the spindle motor over each electrical revolution (period) of the motor. A commutation state involves supplying the motor with current to one phase winding, sinking current from another phase winding, and holding the third phase winding at a high impedance.

Detection circuitry measures the BEMF voltage generated on the unenergized phase, compares this BEMF voltage to the voltage at a center tap of the motor's windings, and outputs a signal at a zero crossing of the BEMF voltages of the phase windings during rotation; that is, when the BEMF voltage changes polarity with respect to the voltage at the center tap. This zero crossing point is then used as a timing reference or synchronization signal for the next commutation state, as well as a reference to indicate the position and relative rotational velocity of the motor.

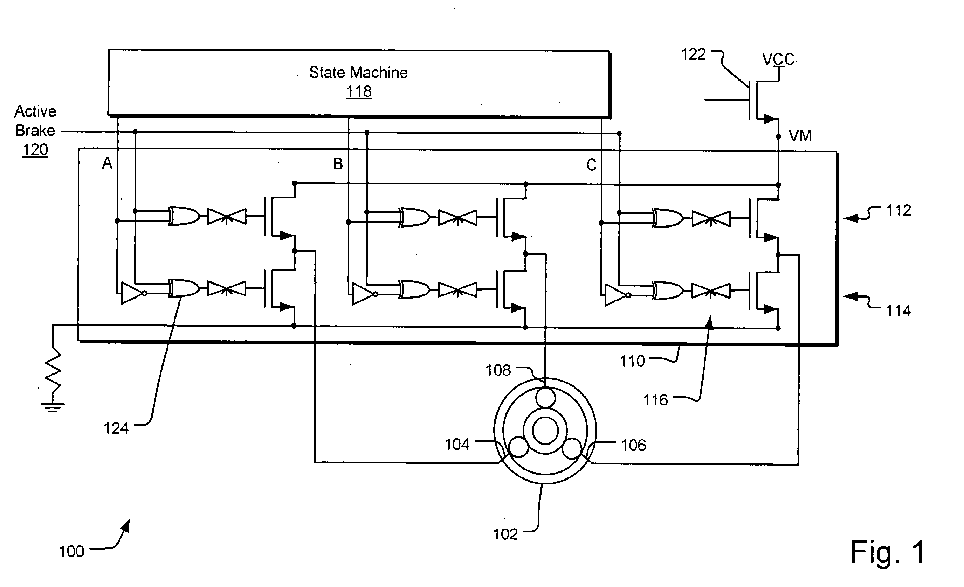

FIG. 1 illustrates exemplary control circuitry 100 for a phased motor 102. In FIG. I, the phased motor 102 represents a three-phase, brushless, DC motor driving a spindle of a disc drive device, although other phased motors and other devices are contemplated. Taps 104, 106, and 108 of the phased motor 102 are connected to driver pairs in a commutation logic circuit 110. Each driver pair has a high-side driver 112 supplying current to a winding and a low-side driver 114 sinking current from winding. For example, a high side driver from the commutation logic circuit 110 can source current to a first phase winding in the phased motor 102, and a low side driver from the communication logic circuit 110 can sink current to a second phase winding in the phased motor 102. For the third phase winding, a driver pair is tri-stated (e.g., using tri-state buffers 116) to provide a high impedance. In the exemplary control circuitry 100, each driver includes a Field Effect Transistor (FET) that sources current, sinks current, or is held at a high impedance, depending on the commutation state.

It should be understood that each cycle through a full sequence of commutation states comprise one electrical revolution of the phased motor 102. The number of electrical revolutions in a physical, mechanical revolution of the phased motor hub is determined by the number of poles. With 3 phases, a 12-pole motor will have six electrical revolutions for each mechanical revolution of the phased motor.

The communication logic circuit 110 includes three stages, each stage pertaining to one of the phase windings. For the purposes of this descriptions, the phase windings have been designated as A, B, and C. As such, the commutation logic circuit 110 has a stage A, a stage B, and a stage C, each stage responsible for driving current through a corresponding winding in the phased motor. The resulting current flow through two of the windings in each commutation state induces electromagnetic fields that interact with a corresponding array of permanent magnets (not shown) mounted to the rotor of the phased motor (e.g., the spindle motor hub), thus inducing torque upon the spindle motor hub in a desired rotational direction.

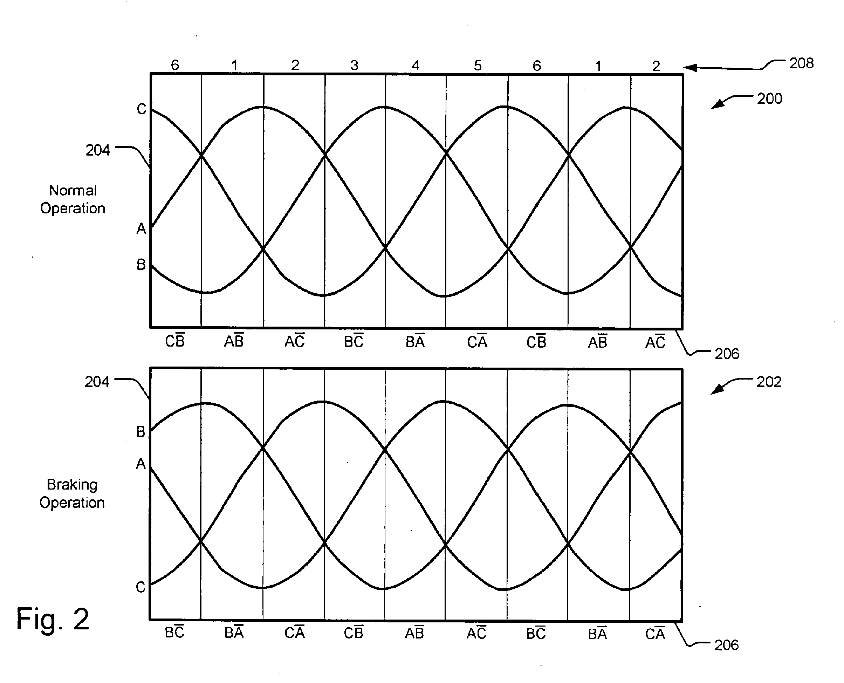

A component of a base excitation signal is input to each stage from a state machine 118. The base excitation signals are generated to control rotation of the phased motor 102, as described with regard to FIG. 2. For example, a base excitation signal component of "A", which supplies current to the phase A windings of the phased motor 102, arises when the high-side driver in stage A is enabled and the low-side driver in stage A is disabled. In the illustrated implementation, this result could arise from a low voltage at an active braking signal 120 and a high voltage at the input from the state machine 118 to stage A or from a high voltage on the active braking signal 120 and a low voltage at the input from the state machine 118 to stage A. In contrast, an excitation signal component of "A-not" or "$\overline{A}$", which sinks current from the phase A winding, arises when the high-side driver in stage A is disabled and the low-side driver in stage A is enabled. In the illustrated implementation, this result could arise from a low voltage at the active braking signal 120 and a low voltage at the input from the state machine 118 to stage A or from a high voltage at the active braking signal 120 and a high voltage at the input from the state machine 118 to stage A.

In a three phase motor, if one phase is low and another phase is high, the third phase is held at high impedance (i.e., tri-stated) using the tri-state buffers 116. In one implementation, the tri-state buffers 116 are also controlled by the state machine 118. When tri-stated, a driver effectively operates as an "open" circuit, such that it neither sources nor sinks current relative to the phased motor.

The commutation logic circuit 110 is powered by a voltage VM, which is coupled to a voltage VCC via an ISOFET switch 122. During normal operation, the active braking signal 120 is disabled (e.g., low voltage), and the base excitation signals from the state machine 118 are input to the corresponding stages to apply a sequence of base excitation signals to the phases of the phased motor 102. In one implementation, for example, the base excitation signals issued from the commutation logic circuit 110 to the phased motor 102 in each commutation state follow a sequence to rotate the phased motor (the phase signal not shown in each pair below is tri-stated):

$$A\overline{B},\ A\overline{C},\ B\overline{C},\ B\overline{A},\ C\overline{A},\ C\overline{B},... \tag{1}$$

Active braking can be obtained by complementing each base excitation signal in each commutation state of the sequence. Using the circuit illustrated in FIG. 1, active braking can be obtained by maintaining the same state machine output sequence but enabling the active braking signal 120 to achieve the following sequence (corresponding to the same commutation state sequence for normal operation) of complementary excitation signals:

$$B\overline{A},\ C\overline{A},\ C\overline{B},\ A\overline{B},\ A\overline{C},\ B\overline{C},... \tag{2}$$

The excitations signals listed in sequence (2) are complementary to those listed in sequence (1). In one implementation, a base excitation signal is complemented by inputting it, in combination with an active high active braking signal, to an XOR logic circuit (e.g., XOR gate 124), the output of which is coupled to a driver. It should be understood however that other configurations for complementing a base excitation signal are also contemplated. Accordingly, a complementary excitation signal to the base excitation signal of normal operation is applied to the phased motor 102 in each commutation state, thereby actively decelerating the rotation of or "brake" the phased motor 102.

It should be understood that other logic configurations may be employed to generate the complementary excitation signal, and such alternatives are contemplated within the described technology. For example, the state machine may generate complementary excitation signals directly, the state machine or commutation logic may be capable of advancing the phase of the base excitation signals by a predetermined number of phases (e.g., three phases for a three phase motor) to generate complementary excitation signals, etc.

FIG. 2 illustrates exemplary phase diagrams 200 and 202 for excitation signals in normal operation and in braking operation during rotation of a phased motor. The Y-axis 204 of each diagram indicates voltage levels and the X-axis 206 of each diagram indicates time. The X-axis is further divided up into commutation states, numbered consecutively and repeatedly at 208. Each trace in the diagrams represents a voltage trace of an excitation signal over time. The value of the excitation signal (e.g., $B\overline{A}$), whether a base excitation signal or complementary excitation signal, corresponding to a given commutation state is listed below each diagram.

For normal operation, an example sequence of base excitation signals is listed below diagram 200, matching sequence (1). It should be understood that other sequences are contemplated. In braking operation, the complementary excitation signal of each base excitation signal is listed in corresponding commutation states. Application of these complementary excitation signals to the phased motor in sequence while the phased motor is rotating results in deceleration of the phased motor.

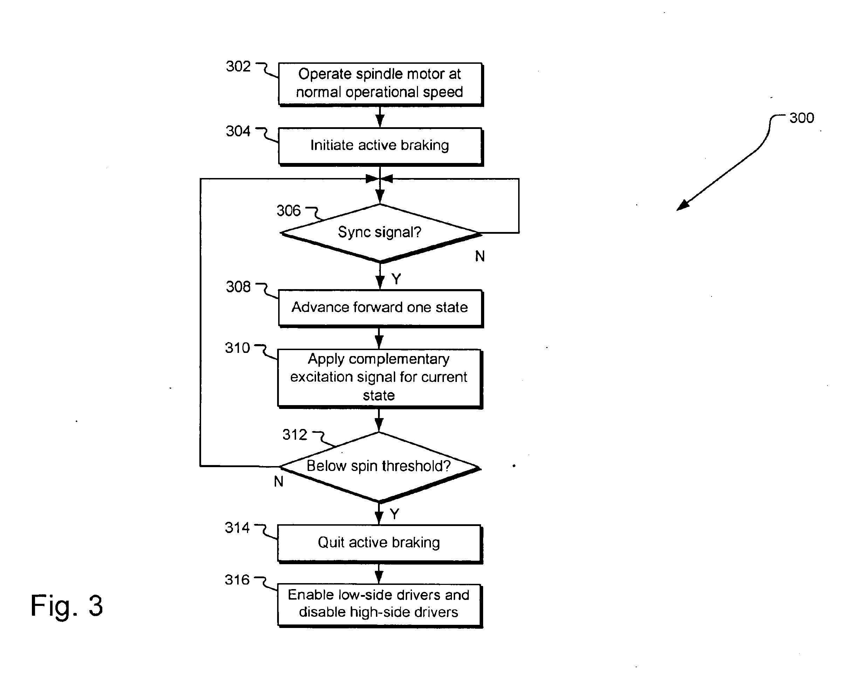

FIG. 3 illustrates exemplary operations 300 for controlling rotation of a phased motor. In FIG. 3, the description relates to a spindle motor of a storage device, such as a hard disc drive or optical disc drive, although the operations can apply to different types of phased motors. A normal operation 302 operates the spindle motor at normal operational speed (e.g.; 15,000 RPMs).

An initiation operation 304 detects an event that triggers the active braking of the phased motor. For example, a free-fall detector might determine that system is falling and therefore initiate various protective steps, including asserting the active braking signal. Alternatively, a shock sensor or another catastrophic event sensor may detect a need to stop the spindle motor and therefore signal the control circuitry to brake the spindle motor.

A synchronization operation 306 determines whether the motor has reached the end of a commutation state, whether by detecting a zero-crossing or by some other synchronization detection action. If not, the synchronization operation 306 continues to loop until the end of the commutation state is detected.

At the end of the commutation state, an advancement operation 308 advances the state machine one commutation state forward in the commutation sequence. A reverse torque operation 310 applies a complementary excitation signal, relative to the normal excitation signal for the current commutation state, to the phased motor, thereby reducing the rotational velocity of the motor. For example, if the normal excitation signal for the current commutation state is $A\overline{B}$, then the complementary excitation signal of $B\overline{A}$ is applied to the motor.

A decision operation 312 determined whether the rotational velocity of the phased motor has reduced to a predetermined threshold. If not, processing returns to the synchronization operation 306 to await the end of the current commutation state. However, if the rotational velocity has reduced to a predetermined threshold, a termination operation 314 disables the active braking signal, and a dynamic braking operation 316 enables all of the low-side drivers and disables all of the high-side drivers to complete the braking of the motor. In this manner, the phased motor will not begin to spin in the opposite direction after its rotational velocity reaches zero. It should be understood that dynamic braking can be performed in other configurations, such as by disabling all of the low-side drivers and enabling all of the high-side drivers.

Embodiments of the present invention will be discussed with reference to a magnetic disc drive. One skilled in the art will recognize that the present invention may also be applied to any data storage device, such as an optical disc drive, a magneto-optical disc drive, or a compact disc drive, that is capable of operating in two or more power levels. Further, one skilled in the art will understand that embodiments of the present invention are equally applicable to any type of electrical or electronic device capable of operating at more than one power level. For example, devices that may implement embodiments of the present invention include but are not limited to notebook computers, handheld devices such as Personal Digital Assistants (PDAs), cell phones, office equipment such as copiers and fax machines, etc.

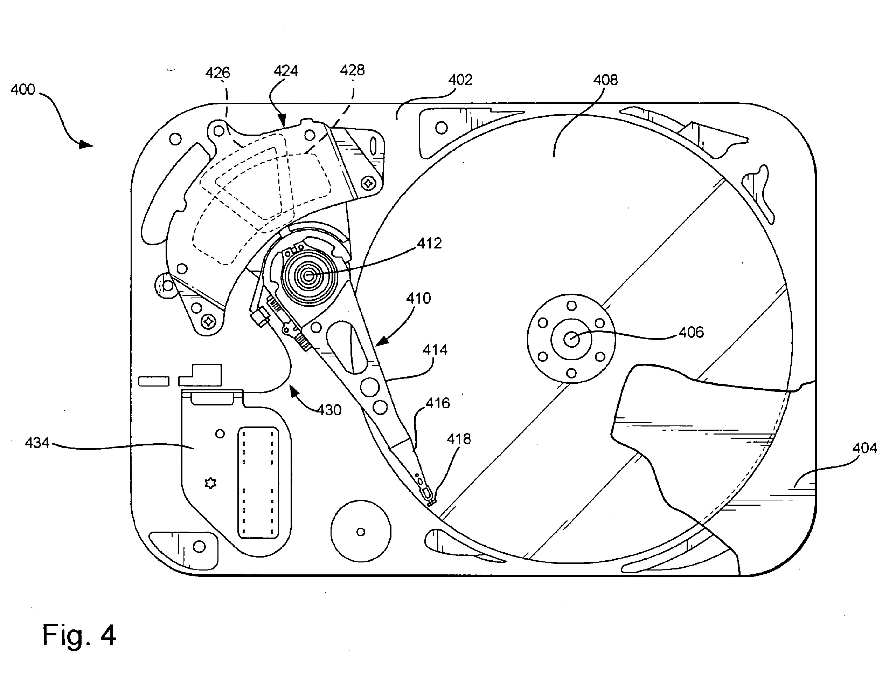

FIG. 4 illustrates a plan view of a disc drive in accordance with at least a portion of the described technology. The disc drive 100 includes a base 402 to which various components of the disc drive 400 are mounted. A top cover 404, shown partially cut away, cooperates with the base 402 to form an internal, sealed environment for the disc drive in a conventional manner. The components include a spindle motor 406 which rotates one or more discs 408 at a constant high speed. Information is written to and read from tracks on the discs 408 through the use of an actuator assembly 410, which rotates during a seek operation about a bearing shaft assembly 412 positioned adjacent the discs 408. The actuator assembly 410 includes a plurality of actuator arms 414 which extend towards the discs 408, with one or more flexures 416 extending from each of the actuator arms 414. Mounted at the distal end of each of the flexures 416 is a head 418 which includes an air bearing slider enabling the head 418 to fly in close proximity above the corresponding surface of the associated disc 408.

During a seek operation, the track position of the heads 418 is controlled through the use of a voice coil motor (VCM) 424, which typically includes a coil 426 attached to the actuator assembly 410, as well as one or more permanent magnets 428 which establish a magnetic field in which the coil 426 is immersed. The controlled application of current to the coil 426 causes magnetic interaction between the permanent magnets 428 and the coil 426 so that the coil 426 moves in accordance with the well-known Lorentz relationship. As the coil 426 moves, the actuator assembly 410 pivots about the bearing shaft assembly 412, and the heads 418 are caused to move across the surfaces of the discs 408.

The spindle motor 406 is typically de-energized when the disc drive 400 is not in use for extended periods of time. The heads 418 are moved away from portions of the disk 408 containing data when the drive motor is de-energized. The heads 418 are secured over portions of the disk not containing data through the use of an actuator latch arrangement and/or ramp, which prevents inadvertent rotation of the actuator assembly 410 when the drive discs 408 are not spinning.

A flex assembly 430 provides the requisite electrical connection paths for the actuator assembly 410 while allowing pivotal movement of the actuator assembly 410 during operation. The flex assembly 430 includes a printed circuit board 434 to which a flex cable 432 connected with the actuator assembly 400 and leading to the head 418 is connected. The flex cable 432 may be routed along the actuator arms 414 and the flexures 416 to the heads 418. The printed circuit board 434 typically includes circuitry for controlling the write currents applied to the heads 418 during a write operation and a preamplifier for amplifying read signals generated by the heads 418 during a read operation. The flex assembly 434 terminates at a flex bracket 436 for communication through the base deck 402 to a disc drive printed circuit board (not shown) mounted to the bottom side of the disc drive 400.

In an exemplary implementation, spindle motor control circuitry in the disc drive 400 includes an active braking trigger, a state machine, and a commutation logic circuit that applies active braking to the spindle motor until the rotational velocity of the spindle motor reduces to a threshold. At that point, the commutation logic circuit applies dynamic braking until the spindle motor stops rotating.

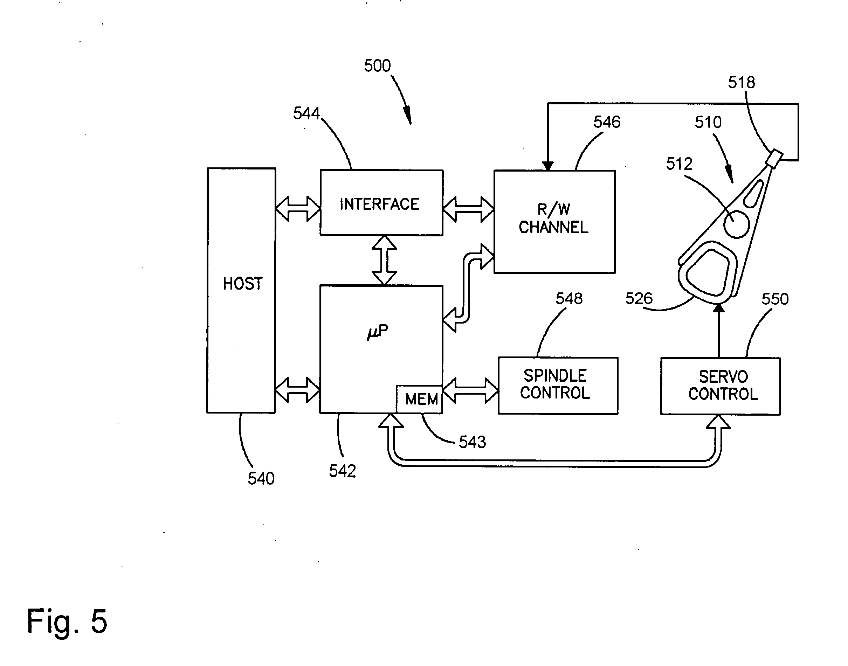

FIG. 5 illustrates the primary functional components of a disc drive incorporating one of the various implementations of the described technology and generally shows the main functional circuits that are resident on the disc drive printed circuit board and used to control the operation of the disc drive. The disc drive is operably connected to a host computer 540 in a conventional manner. Control communication paths are provided between the host computer 540 and a disc drive microprocessor 542, the microprocessor 542 generally providing top level communication and control for the disc drive in conjunction with programming for the microprocessor 542 stored in microprocessor memory (MEM) 543. The MEM 543 can include random access memory (RAM), read only memory (ROM) and other sources of resident memory for the microprocessor 542.

The discs are rotated at a constant high speed by a spindle motor control circuit 548, which typically electrically commutates the spindle motor through the use, typically, of back electromotive force (BEMF) sensing. During a seek operation, wherein an actuator 510 moves heads 518 between tracks, the position of the heads 518 is controlled through the application of current to the coil 526 of a voice coil motor. A servo control circuit 550 provides such control. During a seek operation the microprocessor 542 receives information regarding the velocity of the head 518, and uses that information in conjunction with a velocity profile stored in memory 543 to communicate with the servo control circuit 550, which will apply a controlled amount of current to the voice coil motor coil 526, thereby causing the actuator assembly 510 to be pivoted.

Data is transferred between the host computer 540 or other device and the disc drive by way of an interface 544, which typically includes a buffer to facilitate high speed data transfer between the host computer 540 or other device and the disc drive. Data to be written to the disc drive is thus passed from the host computer 540 to the interface 544 and then to a read/write channel 546, which encodes and serializes the data and provides the requisite write current signals to the heads 518. To retrieve data that has been previously stored in the data storage device, read signals are generated by the heads 518 and provided to the read/write channel 546, which performs decoding and error detection and correction operations and outputs the retrieved data to the interface 544 for subsequent transfer to the host computer 540 or other device.

In an exemplary implementation, spindle control 548 in the disc drive includes a state machine and a commutation logic circuit that applies active braking to the spindle motor until the rotational velocity of the spindle motor reduces to a threshold. At that point, the commutation logic circuit applies dynamic braking until the spindle motor stops rotating.

The technology described herein is implemented as logical operations and/or modules in one or more systems. The logical operations may be implemented as a sequence of processor-implemented steps executing in one or more computer systems and as interconnected machine or circuit modules within one or more computer systems. Likewise, the descriptions of various component modules may be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. Furthermore, it should be understood that logical operations may be performed in any order, unless explicitly claimed otherwise or a specific order is inherently necessitated by the claim language.

The above specification, examples and data provide a complete description of the structure and use of example embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention. In particular, it should be understood that the described technology may be employed independent of a personal computer. Other embodiments are therefore contemplated. It is intended that all matter contained in the above description and shown in the accompanying drawings shall be interpreted as illustrative only of particular embodiments and not limiting. Changes in detail or structure may be made without departing from the basic elements of the invention as defined in the following claims.

Although the subject matter has been described in language specific to structural features and/or methodological arts, it is to be understood that the subject matter defined in the appended claims is not necessarily limited to the specific features or acts descried above. Rather, the specific features and acts described above are disclosed as example forms of implementing the claimed subject matter.

**Claims**

1. Motor control circuitry configured to generate a complementary excitation signal to each base excitation signal in a sequence of commutation states.

2. The motor control circuitry of claim 1 further comprising:

   at least one logic circuit that receives as input an active braking signal and a base excitation signal component of a base excitation signal, the at least one logic circuit outputting a complementary excitation signal component of the base excitation signal component to a motor when the active braking signal is applied.

3. Apparatus comprising:

   a commutation logic circuit coupled to receive a sequence of base excitation signals, each base excitation signal corresponding to a commutation state, wherein the commutation logic circuit applies to a phased motor a complementary excitation signal of the base excitation signal in each commutation state.

4. The apparatus of claim 3 wherein the commutation logic circuit applies the base excitation signal corresponding to each commutation state to rotate the phased motor in the absence of an active braking signal.

5. The apparatus of claim 3 or claim 4, wherein the commutation logic circuit applies the complementary excitation signal of the base excitation signal corresponding to each commutation state to decelerate rotation the phased motor in the presence of the active braking signal.

6. The apparatus of any one of claims 3 to 5 wherein the base excitation signal for at least one commutation state comprises at least two out-of-phase excitation signal components A and B and the complementary excitation signal of a base excitation signal $A\overline{B}$ is $B\overline{A}$ .

7. The apparatus of any one of claims 3 to 6 wherein phased motor has three phases and the complementary excitation signal of a first base excitation signal is the same as a second base excitation signal that is three commutation states later in the sequence of base excitation signals.

8. The apparatus of any one of claims 3 to 7 wherein the commutation logic circuit applies a dynamic braking signal to the phased motor subsequent to applying at least one complementary excitation signal, if the rotational speed of the phased motor has decreased below a threshold rotational speed.

9. The apparatus of claim 8 further comprising:

   a set of low-side drivers that assist in driving the rotation of the phased motor;
   a set of high-side drivers that assist in driving the rotation of the phased motor, wherein the dynamic braking signal enables the low-side drivers and disables the high-side drivers.

**10.** The apparatus of claim 8 further comprising:

a set of low-side drivers that assist in driving the rotation of the phased motor;
a set of high-side drivers that assist in driving the rotation of the phased motor, wherein the dynamic braking signal disables the low-side drivers and enables the high-side drivers.

**11.** The apparatus of any one of claims 3 to 10 further comprising:

a synchronization module that detects a synchronization signal responsive to receipt of an active braking signal;
a state machine that advances to a next commutation state in the sequence, after the synchronization signal is detected,

wherein the commutation logic circuit applies to the phased motor the complementary excitation signal of the base excitation signal corresponding to the next commutation state.

**12.** The apparatus of any one of claims 3 to 11 further comprising:

an XOR gate that receives as input an active braking signal and a base excitation signal component of the base excitation signal, the XOR gate outputting a complementary excitation signal component of the base excitation signal component to the phased motor when the active braking signal is applied.

**13.** A method comprising:

receiving a sequence of base excitation signals, each base excitation signal corresponding to a commutation state;
applying to the phased motor a complementary excitation signal of the base excitation signal in each commutation state.

**14.** The method of claim 13 wherein the base excitation signal for at least one commutation state comprises at least two out-of-phase excitation signal components A and B and the complementary excitation signal of a base excitation signal $A\overline{B}$ is $B\overline{A}$ .

**15.** The method of claim 13 or claim 14 wherein phased motor has three phases and the complementary excitation signal of a first base excitation signal is the same as a second base excitation signal that is three commutation states later in the sequence of base excitation signals.

**16.** The method of any one of claims 13 to 15 further comprising:

applying a dynamic braking signal to the phased motor subsequent to applying at least one complementary excitation signal, if the rotational speed of the phased motor has decreased below a threshold rotational speed.

**17.** The method of claim 16 wherein the rotation of the phased motor is controlled through a set of low-side drivers and a set of high-side drivers and the operation of applying a dynamic braking signal comprises:

enabling the low-side drivers; and
disabling the high-side drivers.

**18.** The method of claim 16 wherein the rotation of the phased motor is controlled through a set of low-side drivers and a set of high-side drivers and the operation of applying a dynamic braking signal comprises:

disabling the low-side drivers; and
enabling the high-side drivers.

**19.** The method of any one of claims 13 to 18 further comprising:

detecting a synchronization signal, responsive to receipt of an active braking signal ;
advancing to a next commutation state in the sequence, responsive to detecting the synchronization signal, wherein the operation of applying the complementary excitation signal applies to the phased motor the complementary excitation signal of the base excitation signal corresponding to the next commutation state.

**20.** The method of any one of claims 13 to 19 further comprising:

inputting the active braking signal and a base excitation signal component to an XOR gate, the XOR gate outputting a complementary excitation signal component of the base excitation signal component when the active braking signal is applied.

Fig. 1

Fig. 2

302 — Operate spindle motor at normal operational speed

304 — Initiate active braking

300

306 — Sync signal?

N

Y

308 — Advance forward one state

310 — Apply complementary excitation signal for current state

312 — Below spin threshold?

N

Y

314 — Quit active braking

316 — Enable low-side drivers and disable high-side drivers

Fig. 3

Fig. 4

Fig. 5

EP 1 892 712 A2